# EUROPÄISCHE PATENTSCHRIFT

(11) **EP 0 572 019 B1**
(45) Veröffentlichungstag und Bekanntmachung des Hinweises auf die Patenterteilung: **12.08.1998**
(21) Anmeldenummer: 93108608.6
(22) Anmeldetag: 27.05.1993
(51) Int. Cl.: G06F 11/14

(54) **Verfahren zum Betreiben einer Datenverarbeitungsanlage**
Method of operating a data processing facility
Procédé d'activation d'installation de traitement de données

(30) Priorität: 29.05.1992 DE 4217830
(43) Veröffentlichungstag der Anmeldung: 01.12.1993
(73) Patentinhaber: Francotyp-Postalia Aktiengesellschaft & Co., 16547 Birkenwerder (DE)
(72) Erfinder: Günther, Stephan, W-1000 Berlin 28 (DE)
(74) Vertreter: Schaumburg, Thoenes & Thurn

(56) Entgegenhaltungen:
- EP-A- 0 249 061
- WO-A-84/02409
- IBM TECHNICAL DISCLOSURE BULLETIN., Bd.27, Nr.2, Juli 1984, NEW YORK US Seite 976 A. J. SUTTON 'Tracking register'

## Beschreibung

Die Erfindung betrifft ein Verfahren zum Betreiben einer Datenverarbeitungsanlage, bei dem die Datenverarbeitungsanlage mindestens einen kritischen Programmabschnitt abarbeitet, der das Einschreiben von Informationen in einen ersten nicht flüchtigen Speicher veranlasst" und der nach erfolgter Abarbeitung verlassen wird, wobei bei einer auf einen Spannungsausfall folgenden Spannungswiederkehr die vor dem Spannungsausfall im Speicher vorhandenen Informationen wieder bereitgestellt werden.

Ein derartiges Verfahren wird z.B. bei einer Frankiermaschine eingesetzt, die einen nicht flüchtigen Speicher hat, in dem die noch verfügbaren Portobeträge oder die bereits aufgebrauchten Portobeträge gespeichert werden. Bei Spannungswiederkehr nach einem Spannungsausfall muß der Inhalt des Speichers für die weiteren Buchungsvorgänge mit dem Inhalt vor dem Spannungsausfall übereinstimmen.

Bei einem aus der US-A 45 06 299 bekannten Verfahren erzeugt ein Spannungsüberwachungsschaltkreis beim Absinken der Versorgungsspannung ein Signal, welches eine Speichersicherungsroutine in der Datenverarbeitungsanlage auslöst, bei der die sicherheitsrelevanten Informationen in einen nicht flüchtigen Speicher eingeschrieben werden. Um die Routine auch bei abrupt fehlender Versorgungsspannung noch ausführen zu können, muß eine Energiereserve vorgesehen werden, beispielsweise in Form einer in einem Kondensator gespeicherten elektrischen Ladung, die die Betriebsfähigkeit der Datenverarbeitungsanlage über den Zeitpunkt des Spannungsausfalls hinaus für kurze Zeit verlängert. Wenn die Versorgungsspannung wiederkehrt, wird eine weitere Routine gestartet, welche die im nicht flüchtigen Speicher zwischengespeicherten Informationen wieder bereitstellt.

Nachteilig beim bekannten Verfahren ist das Erfordernis, spezielle Hardwarekonponenten zum Erkennen des Absinkens der Versorgungsspannung sowie zur verlängerten Energieversorgung vorzusehen. Dies bedeutet, daß in die Hardware konventioneller Rechnerbaugruppen eingegriffen oder diese Hardware um weitere Bauelemente ergänzt werden muß, um eine Speichersicherung zu erreichen. Der damit verbundene technische Aufwand könnte vermieden werden, wenn es gelänge, die mit der Hardware erreichten Wirkungen durch Lösungen im Softwarebereich zu erzielen.

Aus der dem Erfindungsgegenstand am nächsten kommenden WO-A-8402409 ist ein System zur Sicherung gespeicherter Informationen bekannt, das zwei getrennte Speicher für Programminformationen und einen Zustandsspeicher enthält. Die Informationen werden im ersten und zweiten Speicher gespeichert und die entsprechende Zustandskennung wird einmalig festgehalten. Nach dem Neustart des Programms wird je nach Zustandskennung der Inhalt des ersten Speichers in den zweiten übertragen und umgekehrt.

Es ist Aufgabe der Erfindung, ein Verfahren zum Betreiben einer Datenverarbeitungsanlage anzugeben, mit dem eine hohe Datensicherheit auch bei spontan auftretendem Ausfall der Stromversorgung der Datenverarbeitungsanlage erreicht wird.

Diese Aufgabe wird durch die Merkmale des Anspruchs 1 gelöst. Vorteilhafte Weiterbildungen sind in den abhängigen Ansprüchen angegeben.

Die Erfindung beruht auf der Überlegung, die zu sichernden Informationen zweimal in voneinander getrennten nicht flüchtigen Speichern abzulegen. Fällt die Versorgungsspannung zu einem Zeitpunkt aus, zu dem gerade ein Schreibvorgang im ersten Speicher ausgeführt wird, so ist nicht sichergestellt, daß die zu speichernde Information, z.B. ein Datenbyte, ordnungsgemäß in den Speicher gelangt. Jedoch sind die im zweiten nicht flüchtigen Speicher enthaltenen Informationen, die beim vorherigen Abarbeiten des kritischen Programmabschnitts abgespeichert worden waren, noch unverfälscht erhalten. Die in diesem Speicher gespeicherten Informationen werden nun gemäß der Erfindung in den ersten Speicher eingeschrieben, so daß dessen Speicherinhalt mit dem des zweiten Speichers übereinstimmt. Ein eventueller Schreibfehler im ersten Speicher ist somit aufgehoben.

Wird der kritische Programmabschnitt wegen Spannungsausfalls in der Phase unterbrochen, in der die Informationen in den zweiten Speicher eingeschrieben werden, so wird bei Spannungswiederkehr der Inhalt des ersten Speichers in den zweiten Speicher geladen und so ein möglicher Schreibfehler im zweiten Speicher behoben.

Zur Unterscheidung der verschiedenen Phasen des Einschreibens der Informationen in die beiden Speicher werden diese Phasen jeweils durch eine Zustandskennung gekennzeichnet, z.B. durch eine Zahl oder ein Textzeichen. Bei Spannungswiederkehr wird dann anhand dieser Zustandskennung entschieden, welcher Speicher mit den Informationen des anderen Speichers zu laden ist.

Nach Spannungswiederkehr wird die Phase des Programmabschnitts, in der die Inhalte der Speicher ausgetauscht werden, durch Zustandskennungen gekennzeichnet. Wenn nun in dieser Phase ein Spannungsausfall auftritt, so wird nach Spannungswiederkehr der noch unverfälscht vorhandene Inhalt des ersten oder des zweiten Speichers in den von der Spannungsunterbrechung betroffenen Speicher übertragen. Dadurch wird für alle möglichen Zeitpunkte einer Spannungsunterbrechung sichergestellt, daß die vor der Spannungsunterbrechung vorhandenen Informationen auch nach Spannungswiederkehr ordnungsgemäß zur Verfügung stehen.

Erfindungsgemäß erfolgt das Einschreiben der Zustandskennungen in den Zustandsspeicher mehrfach. Damit wird erreicht, daß selbst bei einem aktuellen fehlerhaften Eintrag die zuvor eingetragene Zustandskennung noch ermittelt werden kann.

Vorteilhafterweise wird beim Lesen der Zustandskennung nach Spannungswiederkehr diese Kennung für die weitere Auswertung zwischengespeichert und die aktuelle Zustandskennung in die selben Speicherplätze des Zustandsspeichers geschrieben, wie die vorherige Zustandskennung, d.h. die Speicherinhalte werden unmittelbar ersetzt. Eine andere Möglichkeit ist die rollierende Eintragung der Zustandskennung in den Zustandsspeicher, wobei die aktuelle Zustandskennung in die Speicherzelle mit gegenüber dem letzten Eintrag z.B. um 1 erhöhter Adresse abgespeichert wird. Wenn so weiter verfahren wird und ein definierter Speicherbereich des Zustandsspeichers vollständig beschrieben ist, wird dieser Bereich des Zustandsspeichers von vorne beginnend überschrieben. Auf diese Weise bleiben die zuletzt eingetragenen Zustandskennungen für eine gewisse Zeit noch gespeichert, so daß auf diese zur Auswertung zugegriffen werden kann.

Die benötigten Speicher, d.h. der erste, zweite Speicher und der Zustandsspeicher können räumlich voneinander getrennt vorhanden sein. Es ist aber auch möglich, nur einen einzigen nicht flüchtigen Speicher vorzusehen, der in verschiedene Speicherbereiche eingeteilt ist, die als die vorgenannten Speicher dienen.

Eine bevorzugte Weiterbildung der Erfindung ist dadurch gekennzeichnet, daß die Datenverarbeitungsanlage mindestens einen unkritischen Programmabschnitt abarbeitet, der kein Einschreiben von Informationen in den ersten oder zweiten nicht flüchtigen Speicher veranlaßt, wobei zu Beginn des Abarbeitens dieses unkritischen Programmabschnitts in den Zustandsspeicher eine dritte Zustandskennung mindestens einmal eingeschrieben wird, und daß bei Spannungswiederkehr beim Vorliegen der dritten Zustandskennung das Abarbeiten des unkritischen Programmabschnitts beim unterbrochenen Programmschritt fortgesetzt wird.

Bei zahlreichen Anwendungen sind Programmabschnitte vorhanden, die nicht sicherheitsrelevante Informationen in Speichern verändern. Eine solche Anwendung ist z.B. das Berechnen von Zwischenergebnissen oder die Dateneingabe, wobei die erforderlichen Programmschritte jeweils anwendungsspezifisch in einem nicht kritischen Programmabschnitt zusammengefaßt sein können. Durch die Maßnahmen der Weiterbildung wird erreicht, daß bei Spannungswiederkehr unmittelbar zum letzten Programmschritt des unkritischen Programmabschnitts verzweigt wird und dort das Abarbeiten von Programmschritten durch die Datenverarbeitungsanlage fortgesetzt wird.

Eine andere Weiterbildung sieht vor, daß mindestens ein kritischer Programmabschnitt und/oder mindestens ein unkritischer Programmabschnitt Teil eines Programmoduls ist, das von der Datenverarbeitungsanlage abgearbeitet wird. Das Programmodul stellt eine in sich geschlossene Funktionseinheit dar, die beispielsweise bei einer Frankiermaschine das Frankieren oder das Eingeben von Portowerten steuert. Durch diese Maßnahme werden die vorgenannten Programmabschnitte in ein Programmodul eingebunden, beispielsweise in Form von Unterprogrammen oder Makroprogrammen.

Die vorgenannte Weiterbildung kann weiterhin dadurch gekennzeichnet sein, daß nach Spannungswiederkehr und bei Vorliegen der ersten Zustandskennung die vom Programmmodul gesteuerten Prozesse zurückgesetzt und/oder das Programmodul erneut abgearbeitet wird.

Durch diese Maßnahme wird erreicht, daß nach Wiederherstellung des Inhalts des ersten nicht flüchtigen Speichers die durch den Spannungsausfall unterbrochene Funktion von Beginn an wiederhoit wird. Dadurch wird sichergestellt, daß eine einmal begonnene, aber nicht beendete Funktion, beispielsweise ein Druckvorgang, zuverlässig ausgeführt wird.

Wird dagegen nach Spannungswiederkehr festgestellt, daß der kritische Programmabschnitt mit zweiter Zustandskennung unterbrochen worden ist, so wird das Abarbeiten des Programmoduls nach Verlassen des kritischen Programmabschnitts, in dem der Inhalt des zweiten Speichers in Übereinstimmung mit dem des ersten Speichers gebracht worden ist, fortgesetzt.

Eine andere Weiterbildung ist dadurch gekennzeichnet, daß beim Abarbeiten mehrerer Programmodule jedem Programmodul eine Modulkennung zugordnet wird, die in einem Modulspeicher zu Beginn des Abarbeitens des Programmoduls mindestens einmal abgespeichert wird, und daß bei Spannungswiederkehr zum Programmodul mit der zuletzt abgespeicherten Modulkennung verzweigt wird.

Durch diese Maßnahme wird erreicht, daß nach Spannungswiederkehr dasjenige Programmodul weiter abgearbeitet wird, das bei Spannungsausfall unterbrochen wurde.

Bei einer weiteren Ausgestaltung der Erfindung wird die erste, die zweite und/oder die dritte Zustandskennung und/oder die Modulkennung jeweils in n Speicherzellen des Zustandspeichers bzw. des Modulspeichers mehrfach abgespeichert, wobei n eine vorgegebene Zahl ist, vorzugsweise 3. Durch das mehrfache Abspeichern der Kennungen wird erreicht, daß die in der Zustandskennung enthaltene Information auch dann noch rekonstruiert werden kann, wenn während des Abspeicherns einer Zustandskennung ein Schreibfehler, z.B. infolge eines Spannungsausfalls auftritt. Die vor diesem Schreibfehler ordnungsgemäß abgespeicherte Zustandskennung kann bei der Spannungswiederkehr ausgewertet werden.

Bei einer Weiterbildung ist vorgesehen, daß bei Spannungswiederkehr die n Speicherzellen des Zustandspeichers bzw. des Modulspeichers gelesen werden, und daß durch eine Majoritätsprüfung und/oder eine Plausibilitätsprüfung festgestellt wird, welche Zustandskennung bzw. Modulkennung vorliegt. Durch diese Maßnahmen wird erreicht, daß bei einem fehlerhaften Abspeichern der letzten Zustandskennung bzw. Modulkennung infolge eines Schreibfehlers die richtige Information noch ermittelt werden kann. Wird z.B. die Zustandskennung ZK=1 insgesamt 4 mal in 4 verschiedene Speicherzellen des Zustandsspeichers eingetragen (d.h. n=4) und ist infolge eines Spannungsausfalls beim vierten Eintrag fälschlicherweise ZK=5 eingetragen worden, so wird bei der Plausibilitätskontrolle festgestellt, daß der Wert ZK=5 fehlerhaft ist, da dieser Wert nicht innerhalb eines vorgegebenen Wertebereichs liegt. Dagegen werden die Einträge ZK=l als gültige Werte erkannt. Als richtige Zustandskennung wird dann ZK=1 ausgewählt.

Bei der Majoritätsprüfung wird festgestellt, welcher Wert in einem Ensemble von Werten am häufigsten vorkommt. Dieser Wert wird dann als die richtige Zustandskennung interpretiert. Je größer die Zahl n gewählt wird, um so höher ist bei der Majoritätsprüfung die Wahrscheinlichkeit mit der die richtige Zustandskennung festgestellt werden kann. Auf diese Weise ist es möglich, die richtige Zustandskennung bzw. Modulkennung auch dann zu ermitteln, wenn mehrere, aufeinander folgende Schreibfehler infolge eines Spannungsausfalls auftreten.

Ein Ausführungsbeispiel der Erfindung wird im folgenden an Hand der Zeichnungen erläutert. Darin zeigen
- Fig. 1: das Blockschaltbild einer Frankiermaschine mit Baueinheiten, soweit sie zum Verständnis der Erfindung erforderlich sind,
- Fig. 2: ein Flußdiagramm der Startphase nach Spannungswiederkehr,
- Fig. 3: ein Flußdiagramm von Programmabschnitten während der Startphase,
- Fig. 4: ein Flußdiagramm eines Programmoduls mit kritischen und unkritischen Programmabschnitten, und
- Fig. 5: FluBdiagramme betreffend das mehrfache Einschreiben und Lesen von Zustands- bzw. Modulkennungen.

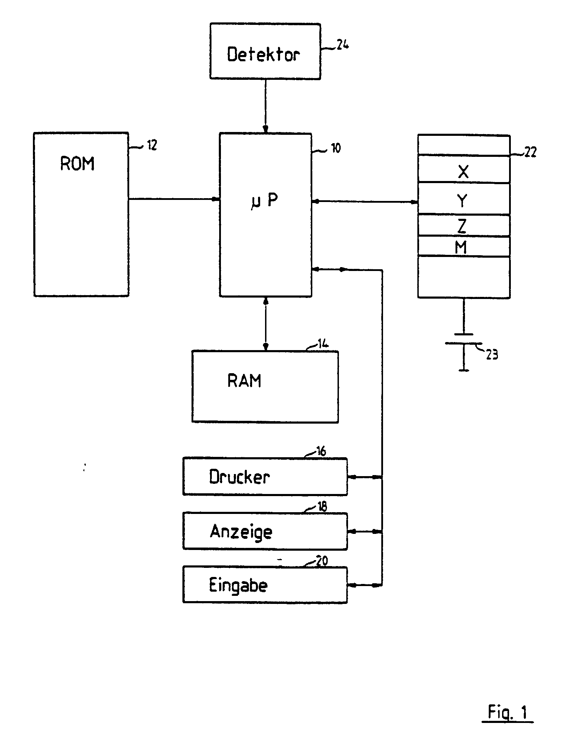

In Fig. 1 sind in einer Blockdarstellung wichtige Baueinheiten einer Frankiermaschine dargestellt. Ein Mikroprozessor 10 arbeitet das in einem Lesespeicher 12 abgelegte Programm, unterstützt von einem Schreib-/Lesespeicher 14, ab und steuert einen Frankierdrucker 16, eine Anzeige 18 sowie eine Dateneingabe 20. Eine wesentliche Aufgabe des Mikroprozessors 10 ist die Portoabrechnung. Hierzu greift er auf einen zentralen nicht flüchtigen Speicher (22) zu, in dem der für die Frankiermaschine noch verfügbare Portobetrag sowie weitere sicherheitsrelevante Daten gespeichert sind. Diese Daten dürfen bei Ausfall der Stromversorgung, z.B. bei Netzausfall oder beim Ausschalten der Frankiermaschine, nicht verloren gehen. Der nicht flüchtige Speicher (22) ist daher durch eine Batterie 23 gepuffert, die ihn auch bei Trennung der Frankiermaschine vom Versorgungsnetz für lange Zeit weiter mit Strom versorgt.

Der Speicher 22 ist in verschiedene Speicherbereiche X, Y, Z und M eingeteilt. Der Bereich X entspricht dem weiter oben genannten ersten Speicher, der Bereich Y dem zweiten Speicher, der Bereich Z dem Zustandsspeicher und der Bereich M dem Modulspeicher. Der Zugriff des Mikroprozessors 10 auf diese Bereiche wird weiter unten im Zusammenhang mit dem Verfahrensablauf erläutert.

Ein Spannungsdetektor 24 übermittelt dem Mikroprozessor 10 ein Signal, wenn die Versorgungsspannung der Frankiermaschine ihren normalen Betriebspegel erreicht hat. Ein Detektor, der ein Absinken der Betriebsspannung anzeigt, sowie eine Pufferbatterie, die den Betrieb des Mikroprozessors 10 für kurze Zeit über den Zeitpunkt des Spannungsabfalls hinaus noch aufrechterhält, sind bei der Erfindung nicht erforderlich. Die Komponenten 10, 12, 14 und 24 gehören zu den üblichen Komponenten einer Rechnerbaugruppe, so daß bei Anwendung der Erfindung auf derartige Baugruppen zurückgegriffen werden kann und der Hardwareaufbau nicht verändert werden muß.

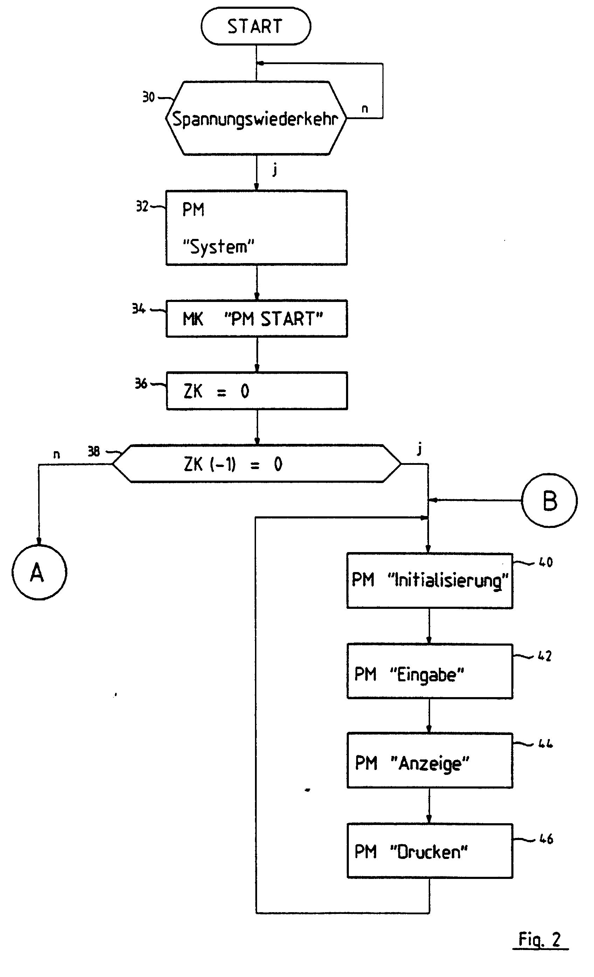

In Fig. 2 ist in einem Flußdiagramm der Verfahrensablauf bei Spannungswiederkehr dargestellt. Im Verfahrensschritt 30 wird festgestellt, ob der Detektor 24 eine Spannungswiederkehr meldet. Falls dies zutrifft, wird im Verfahrensschritt 32 das Programmodul SYSTEM abgearbeitet, wobei grundlegende Systemtests durchgeführt werden, beispielsweise, ob der nicht flüchtige Speicher (22) betriebsbereit ist.

Nach Abarbeiten des Programmoduls SYSTEM wird im Verfahrensschritt 34 das Programmodul START gestartet. Hierzu wird die diesem Programmodul zugeordnete Modulkennung MK in den Bereich M des Speichers 22 eingeschrieben, beispielsweise in Form eines Textes (z.B. "start") oder einer Zahl. Danach wird in den Bereich Z des Speichers 22 die Zustandskennung ZK=0 eingetragen. Diese Zustandskennung ZK steht für einen nicht kritischen Programmabschnitt, in welchem keine Daten im Speicher 22 geändert werden.

Im nachfolgenden Verfahrensschritt 38 wird ermittelt, ob die vor der Spannungswiederkehr zuletzt eingetragene Zustandskennung ZK den Wert 0 hat. Hierzu wird auf den Bereich Z des Speichers 22 zugegriffen. Wenn dies der Fall ist, d.h. das Programm wurde in einem nicht kritischen Programmabschnitt unterbrochen, so daß eine Wiederherstellung der Speicherinhalte im Speicher 22 nicht erforderlich ist, so wird zum nächsten Programmodul 40 verzweigt, in dem die Initialisierung verschiedener Geräte und Systemkomponenten erfolgt. Anschließend werden die weiteren Programmodule 42, 44, 46 abgearbeitet, die die eigentlichen Funktionen der Frankiermaschine bewirken, wie z.B. das Eingeben von Daten, die Anzeige von Daten und das Drucken des Portowertes.

Nach dem Abarbeiten des Programmoduls DRUCKEN im Verfahrensschritt 46 wird wieder zum Verfahrensschritt 40 verzweigt, so daß die Funktionen der Frankiermaschine weiterhin aktiviert sind und bei Bedarf ausgeführt werden können. Das Starten und Abarbeiten der in den Verfahrensschritten 40 bis 46 genannten Programmodule muß nicht unbedingt in der in Fig. 2 angegebenen Reihenfolge erfolgen, sondern kann je nach vorhandenem Betriebssystem interruptgesteuert in einer anderen, durch Anforderungen von außen vorgegebenen Reihenfolge ausgeführt werden.

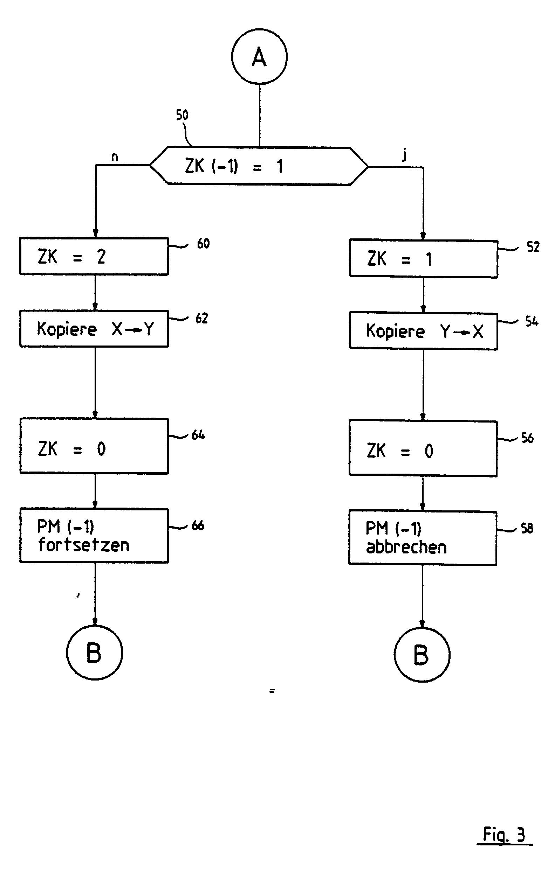

Falls im Verfahrensschritt 38 festgestellt wird, daß die Zustandskennung ZK vor dem Spannungsausfall nicht den Wert 0 hat, d.h., daß ein kritischer Programmabschnitt unterbrochen wurde, so wird der Ablauf bei A fortgesetzt, der in Fig. 3 dargestellt ist und nachfolgend beschrieben wird. Im Verfahrensschritt 50 wird abgefragt, ob die vor dem Spannungsausfall zuletzt abgespeicherte Zustandskennung ZK den Wert 1 hat. Falls dies zutrifft, so wird im Verfahrensschritt 52 die Zustandskennung ZK=1 in den Bereich Z des Speichers 22 eingetragen, da der nachfolgende Programmschritt 54 sicherheitsrelevante Daten im Speicher 22 verändert und damit ein kritischer Programmabschnitt vorliegt. Bis zum Verfahrensschritt 52 hatte die aktuelle Zustandskennung ZK gemäß Verfahrensschritt 36 den Wert 0.

Der Wert 1 der vor dem Spannungsausfall zuletzt abgespeicherten Zustandskennung ZK-1 bedeutet, daß eine Unterbrechung des kritischen Programmabschnitts in der Phase erfolgt ist, in der Informationen in den ersten nicht flüchtigen Speicher, d.h. in den Bereich X, eingeschrieben oder verändert worden sind. Da im zweiten Speicher, d.h. im Bereich Y, sämtliche Informationen vom vorherigen Durchlaufen des kritischen Programmabschnitts noch unverändert erhalten sind, kann der vor der Spannungsunterbrechung im Bereich X herrschende Zustand wieder hergestellt werden . Hierzu werden gemäß Verfahrensschritt 54 die Informationen des Bereichs Y in den Bereich X übertragen.

Die nachfolgenden Verfahrensschritte betreffen wieder nicht kritische Programmabschnitte, so daß die Zustandskennung im Verfahrensschritt 56 auf den Wert 0 gesetzt wird. Im Verfahrensschritt 58 wird anhand der Modulkennung MK festgestellt, welches Programmodul beim Spannungsausfall unterbrochen worden war. Je nach Art des unterbrochenen Programmoduls, werden die begonnenen Prozesse abgebrochen oder rückgängig gemacht. Beispielsweise wird eine teilweise bearbeitete Anforderung für ein Frankieren abgebrochen. Diese Frankieranforderung kann dann, falls noch erforderlich, erneut gestartet und bearbeitet werden. Erfolgte die Unterbrechung bei der Eingabe von Daten, so werden diese Daten ignoriert, und es wird gegebenenfalls erneut zur Eingabe von Daten aufgefordert. Anschließend wird zum Verfahrensschritt 40 verzweigt (Fig. 2) und die weiteren Programmodule abgearbeitet.

Wenn im Verfahrensschritt 50 festgestellt wird, daß der Wert der Zustandskennung ZK nicht 1 ist, was bedeutet, daß die Zustandskennung ZK den Wert 2 hat, so wird zum Verfahrensschritt 60 verzweigt. Der Wert 2 besagt einerseits, daß beim Spannungsausfall der kritische Programmabschnitt in der Phase unterbrochen worden ist, in der Informationen in den zweiten Speicher eingeschrieben worden sind. Andererseits sind die Informationen bei der Abarbeitung des kritischen Programmabschnitts noch ordnungsgemäß in den ersten Speicher eingetragen worden. Der Inhalt des zweiten Speichers muß demnach noch mit den Informationen des ersten Speichers beschrieben werden, damit beide Speicher identischen Inhalt haben. Da ein Speicherzugriff auf den Speicher 22 erforderlich ist und sicherheitsrelevante Daten geändert werden, wird im Verfahrensschritt 60 die aktuelle Zustandskennung ZK auf 2 gesetzt (sie hatte bislang den Wert 0) und im Verfahrensschritt 62 wird der Inhalt des Speicherbereichs X in den Bereich Y übertragen.

Mit dem nächsten Verfahrensschritt 64 beginnt wieder ein unkritischer Programmabschnitt in dem keine Daten im Speicher 22 geändert werden. Die Zustandskennung ZK wird daher im Verfahrensschritt 64 auf den Wert 0 gesetzt.

Im nachfolgenden Verfahrensschritt 66 wird anhand der Modulkennung MK festgestellt, welches Programmodul bearbeitet worden war, bevor die Unterbrechung infolge Spannungsausfalls aufgetreten ist. Da die Portoabrechnung im ersten nicht flüchtigen Speicher bzw. im Speicherbereich X ordnungsgemäß ausgeführt und damit die zu diesem Prozeßschritt gehörende Datenänderung im Speicher 22 erfolgreich durchgeführt worden ist, kann der unterbrochene Prozeß weitergeführt bzw. abgeschlossen werden. Beispielsweise kann eine begonnene und dann unterbrochene Frankierung nach Spannungswiederkehr zu Ende geführt werden. Anschließend wird zum Verfahrensschritt 40 (Fig. 2) weitergegangen.

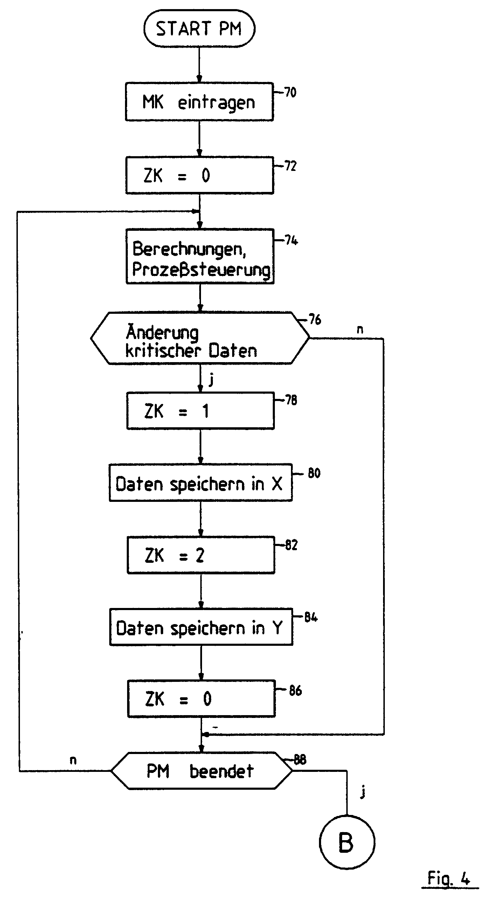

In Fig. 4 ist der Ablauf beim Abarbeiten eines Programmmoduls dargestellt, das kritische und nicht kritische Programmabschnitte enthält. Nach dem Start des Programmmoduls wird die das Programmodul kennzeichnende Modulkennung MK in den Modulspeicher M eingetragen (Verfahrensschritt 70). Im darauffolgenden Verfahrensschritt wird als Zustandskennung ZK der Wert 0 in den Zustandsspeicher Z eingetragen und damit der nachfolgende Programmabschnitt als unkritisch gekennzeichnet. Beim Abarbeiten des nächsten Verfahrensschritts 74 werden die für die Funktion des Programmoduls notwendigen Berechnungen, die Prozeßsteuerung oder der Datentransfer durchgeführt, beispielsweise um einen Brief in der Frankiermaschine zu transportieren und zu frankieren.

Im Verfahrensschritt 76 wird abgefragt, ob Informationen im nicht flüchtigen Speicher 22 zu ändern sind. Falls dies nicht zutrifft, wird zum Schritt 88 verzweigt. Andernfalls werden die nachfolgenden Verfahrensschritte 78 bis 86 ausgeführt, die einen kritischen Programmabschnitt darstellen. Im Verfahrensschritt 78 wird die Zustandskennung ZK auf den Wert 1 gesetzt. Anschließend wird im Verfahrensschritt 80 die Manipulation des ersten nicht flüchtigen Speichers, d.h. im Speicherbereich X, ausgeführt und die Informationen eingeschrieben. Beispielsweise wird der nach einer durchgeführten Frankierung noch verbleibende Gesamtbetrag für das Porto eingetragen. Damit ist die erste Phase des kritischen Programmabschnitts abgeschlossen.

In der nachfolgenden zweiten Phase wird im Verfahrensschritt 82 die Zustandskennung ZK auf den Wert 2 gesetzt und anschließend im Verfahrensschritt 84 die vorgenannten Informationen in den zweiten nicht flüchtiger Speicher, d.h. in den Speicherbereich Y eingeschrieben. Damit ist die zweite Phase des kritischen Programmabschnitts abgeschlossen. Es ist noch zu erwähnen, daß während des kritischen Programmabschnitts auch Programmschritte wie z.B. Berechnungen oder Prozeßsteuerungen ausgeführt werden können. Die zum kritischen Programmabschnitt gehörenden Verfahrensschritte können in Form eines Unterprogramms oder eines Makroprogramms in das Programmodul eingebunden sein.

Nachfolgend wird im Verfahrensschritt 86 die Zustandskennung auf den Wert 0 gesetzt, der einen nachfolgenden unkritischen Programmabschnitt kennzeichnet. Im darauffolgenden Verfahrensschritt 88 wird überprüft, ob sämtliche Programmschritte des Programmoduls abgearbeitet sind. Wenn dies nicht zutrifft, so wird zum Verfahrensschritt 74 verzweigt. Andernfalls wird das nächste Programmodul abgearbeitet, z.B. das Programmodul des Verfahrensschritts 40.

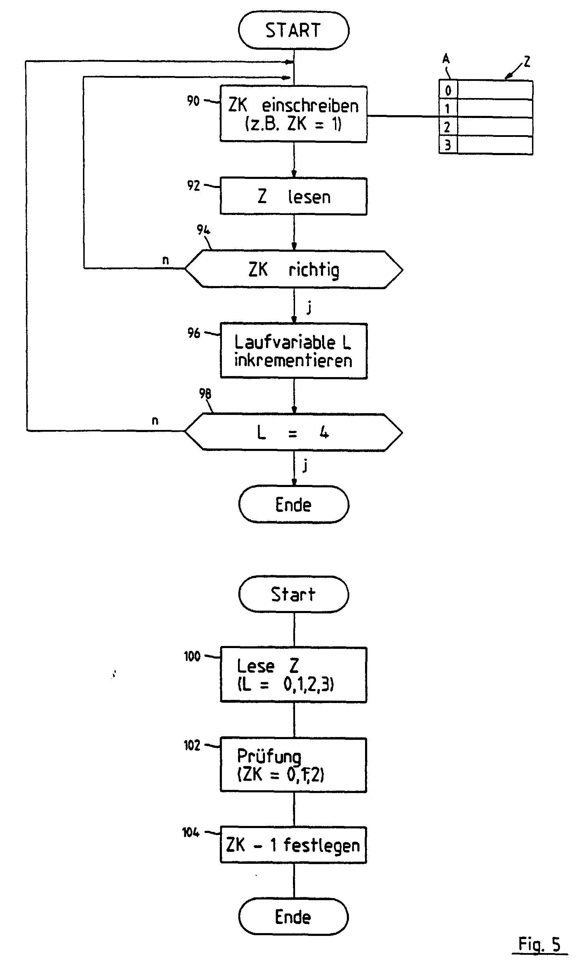

In Fig. 5 sind in zwei Flußdiagrammen Verfahrensschritte dargestellt, die das mehrfache Einschreiben und Auslesen von Zustandskennungen betreffen. Diese Verfahrensschritte können auf analoge Weise auch beim Einschreiben und Lesen der Modulkennung verwendet werden. Wie weiter vorne bereits erläutert, dient das mehrfache Einschreiben dazu, die Redundanz des Verfahrens zu erhöhen, so daß fehlerhafte Zustandskennungen bei der Anwendung des Verfahrens toleriert werden. Die nachfolgend beschriebenen Verfahrensschritte 90 bis 98 sowie 100 bis 104 können beispielsweise an Stelle der Verfahrensschritte 78 (Fig. 4) bzw. 38 (Fig. 2) verwendet werden.

Im Verfahrensschritt 90 wird die aktuelle Zustandskennung, z.B. ZK=1, in die Speicherzelle mit der Adresse einer Laufvariablen L des Zustandsspeichers Z eingeschrieben. Dieser Zustandsspeicher hat 4 Speicherzellen mit den Adressen A=0,1,2,3,4. Die Laufvariable L hat beim ersten Einschreiben den Wert 0. Im nächsten Verfahrensschritt 92 wird unter Verwendung der Laufvariablen L auf die aktuelle Speicherzelle des Zustandspeichers Z zugegriffen und deren Inhalt gelesen. Im darauffolgenden Verfahrensschritt 94 wird überprüft, ob die Zustandskennung ZK richtig eingetragen worden ist. Wenn dies nicht der Fall ist, so wird zum Verfahrensschritt 90 verzweigt und der Schreibvorgang wiederholt. Falls die Zustandskennung erfolgreich in den Zustandsspeicher Z eingetragen wurde, wird im Verfahrensschritt 96 die Laufvariable um 1 erhöht.

Im Verfahrensschritt 98 wird geprüft, ob die Laufvariable L den Wert 4 erreicht hat. Bei negativem Ergebnis wird zu Schritt 90 verzweigt und die Eintragung in die Speicherzelle mit um 1 erhöhter Adresse ausgeführt. Bei positivem Ergebnis wird der Programmteil verlassen. Der Speicher Z enthält dann unter den Adressen A=0 bis 4 die aktuelle Zustandskennung ZK.

Bei Spannungswiederkehr werden die Verfahrensschritte 100 bis 104 ausgeführt. Im Verfahrensschritt 100 werden die Speicherzellen mit den Adressen 0 bis 4 gelesen. Im nachfolgenden Verfahrensschritt 102 wird eine Majoritäts- oder eine Plausibilitätsprüfung durchgeführt. Bei der Majoritätsprüfung wird festgestellt, welche Zustandskennung ZK am häufigsten in den vorgenannten Speicherzellen vorkommt. Diese Zustandskennung ZK wird dann im Schritt 104 als die letzte Zustandskennung ZK-1 verwendet. Bei der Plausibilitätsprüfung wird festgestellt, ob der oder die eingetragenen Werte einem gültigen, vorher festgelegten Wertebereich angehören, z.B. ZK=0,1,2. Ist dies der Fall, so wird der zuletzt eingetragene gültige Wert als die letzte Zustandskennung ZK-1 verwendet.

## Patentansprüche

1. Verfahren zum Betreiben einer Datenverarbeitungsanlage, bei dem die Datenverarbeitungsanlage bei der Abarbeitung von Programmbefehlen mindestens einen kritischen Programmabschnitt abarbeitet, der das Einschreiben von Informationen in einen ersten nicht flüchtigen Speicher veranlaßt und der nach erfolgter Abarbeitung verlassen wird,
wobei bei einer auf einen Spannungsausfall folgenden Spannungswiederkehr die vor dem Spannungsausfall im Speicher vorhandenen Informationen wieder bereitgestellt werden,
bei dem zusätzlich zum ersten Speicher (X) ein nicht flüchtiger zweiter Speicher (Y) zum Speichern der Informationen und ein als Zustandsspeicher (Z) dienender nicht flüchtiger dritter Speicher bereitgestellt werden,
zu Beginn des Einschreibens der Informationen in den ersten Speicher (X) eine Zustandskennung (ZK=1) in unterschiedliche Speicherzellen des Zustandsspeichers (Z) mehrfach eingeschrieben wird,
nach dem Einschreiben der Informationen eine zweite, von der ersten Zustandskennung (ZK=1) verschiedene Zustandskennung (ZK=2) in unterschiedliche Speicherzellendes Zustandsspeichers (Z) mehrfach eingeschrieben wird,
danach dieselben Informationen in den zweiten Speicher (Y) eingeschrieben werden und der kritische Programmabschnitt verlassen wird,
bei Spannungswiederkehr die vor dem Spannungsausfall in den Zustandsspeicher (Z) zuletzt mehrfach eingeschriebenen Zustandskennungen (ZK-1) gelesen werden und durch eine Vergleichende Prüfung festgestellt wird, welche Zustandskennung (ZK) gültig ist,
bei Vorliegen der ersten Zustandskennung (ZK=1) diese in unterschiedliche Speicherzellen des Zustandsspeichers (Z) mehrfach eingeschrieben wird,
danach die Informationen aus dem zweiten Speicher (Y) in den ersten Speicher (X) übertragen werden und anschließend der kritische Programmabschnitt verlassen wird,
bei Vorliegen der zweiten Zustandskennung (ZK=2) diese in unterschiedliche Speicherzellen des Zustandspeichers (Z) mehrfach eingeschrieben wird,
und bei dem danach die Informationen aus dem ersten Speicher (X) in den zweiten Speicher (Y) eingelesen werden, anschließend der kritische Programmabschnitt verlassen wird und die Datenverarbeitungsanlage die Abarbeitung von Programmbefehlen fortsetzt.

2. Verfahren nach Anspruch 1, dadurch **gekennzeichnet**, daß die Datenverarbeitungsanlage (10) weiterhin mindestens einen unkritischen Programmabschnitt abarbeitet, der kein Einschreiben von Informationen in den ersten oder zweiten nicht flüchtigen Speicher (X) veranlaßt, wobei zu Beginn des Abarbeitens dieses unkritischen Programmabschnitts in den Zustandsspeicher (Z) eine dritte Zustandskennung (ZK=0) mindestens einmal eingeschrieben wird, und daß bei Spannungswiederkehr beim Vorliegen der dritten Zustandskennung (ZK=0) das Abarbeiten des unkritischen Programmabschnitts beim unterbrochenen Programmschritt fortgesetzt wird.

3. Verfahren nach Anspruch 1 oder 2, dadurch **gekennzeichnet**, daß mindestens ein kritischer Programmabschnitt und/oder mindestens ein unkritischer Programmabschnitt Teil eines Programmoduls ist, das von der Datenverarbeitungsanlage (10) abgearbeitet wird.

4. Verfahren nach Anspruch 3, dadurch **gekennzeichnet**, daß nach Spannungswiederkehr und bei Vorliegen der ersten Zustandskennung (ZK=1) die vom Programmmodul gesteuerten Prozesse zurückgesetzt und/oder das Programmodul erneut abgearbeitet wird.

5. Verfahren nach Anspruch 3, dadurch **gekennzeichnet**, daß nach Spannungswiederkehr und bei Vorliegen der zweiten Zustandskennung (ZK=2) das Abarbeiten des Programmoduls fortgesetzt wird.

6. Verfahren nach einem der Ansprüche 3 bis 5, dadurch **gekennzeichnet,** daß beim Abarbeiten mehrerer Programmodule jedem Programmodul eine Modulkennung (MK) zugordnet wird, die in einem nicht flüchtigen Modulspeicher (M) zu Beginn des Abarbeitens des Programmoduls mindestens einmal abgespeichert wird, und daß bei Spannungswiederkehr zum Programmodul mit der zuletzt abgespeicherten Modulkennung (MK) verzweigt wird.

7. Verfahren nach einem der vorhergehenden Ansprüche, dadurch **gekennzeichnet**, daß ein nicht flüchtiger Zentralspeicher (22) eingesetzt wird, dessen verschiedenen, voneinander getrennten Speicherbereiche als erster, zweiter nichtflüchtiger Speicher (X,Y) bzw. als Zustandsspeicher (Z) verwendet werden.

8. Verfahren nach Anspruch 7, dadurch **gekennzeichnet**, daß ein Speicherbereich (M) des Zentralspeichers (22) als Modulspeicher verwendet wird.

9. Verfahren nach einem der vorhergehenden Ansprüche, dadurch **gekennzeichnet**, daß die erste, die zweite und/oder die dritte Zustandskennung (ZK=1,2,0) und/oder die Modulkennung (MK) jeweils in n Speicherzellen des jeweiligen Speichers (Z bzw. M) mehrfach abgespeichert wird, wobei n eine vorgegebene Zahl ist, vorzugsweise 3.

10. Verfahren nach Anspruch 9, dadurch **gekennzeichnet**, daß bei Spannungswiederkehr die n Speicherzellen der jeweiligen Speicher (Z bzw. M) gelesen werden, und daß durch eine Majoritätsprüfung und/oder eine Plausibilitätsprüfung festgestellt wird, welche Zustandskennung (ZK) bzw. Modulkennung (MK) vorliegt.

11. Verfahren nach einem der vorhergehenden Ansprüche, dadurch **gekennzeichnet,** daß es in einer Frankiermaschine angewendet wird.

12. Verfahren nach Anspruch 11, dadurch **gekennzeichnet**, daß beim Abarbeiten des kritischen Programmabschnitts die Portoabrechnung durchgeführt wird.

13. Verfahren nach Anspruch 11 oder 12, dadurch **gekennzeichnet**, daß bei der Abarbeitung des unkritischen Programmabschnitts der Druckvorgang beim Frankieren ausgeführt wird.

## Claims

1. Method for operating a data processing system, where the data processing system in the processing of program commands processes at least one critical program section which causes the writing-in of information into a first non-volatile memory, and which is exited after processing has taken place,
- wherein with a voltage recovery which follows a voltage failure the information present in the memory before the voltage failure is made available again,
- where in addition to the first memory (X), a non-volatile second memory (Y) for storing the information and a non-volatile third memory used as state memory (Z) are made available,
- at the beginning of the writing-in of the information into the first memory (X) a state identifier (ZK=1) is repeatedly written into different memory cells of the state memory (Z),
- after the information has been written in, a second state identifier (ZK=2) different from the first state identifier (ZK=1) is repeatedly written into different memory cells of the state memory (Z),
- thereafter the same information is written into the second memory (Y) and the critical program section is exited,
- with voltage recovery the state identifiers (ZK=1) repeatedly written last into the state memory (Z) before the voltage failure are read and by means of a comparative test it is ascertained which state identifier (ZK) is valid,
- with the presence of the first state identifier (ZK=1) the latter is repeatedly written into different memory cells of the state memory (Z),
- thereafter the information is transmitted from the second memory (Y) into the first memory (X) and subsequently the critical program section is exited,
- with the presence of the second state identifier (ZK=2) the latter is repeatedly written into different memory cells of the state memory (Z),
- and where after that the information is read from the first memory (X) into the second memory (Y), subsequently the critical program section is exited and the data processing system continues the processing of program commands.

2. Method according to claim 1, characterized in that the data processing system (10) furthermore processes at least one non-critical program section which does not cause any writing of information into the first or second non-volatile memory (X), wherein at the beginning of the processing of this non-critical program section a third state identifier (ZK=0) is written at least once into the state memory (Z), and in that with voltage recovery and with the presence of the third state identifier (ZK=0) the processing of the non-critical program section with interrupted program step is continued.

3. Method according to claim 1 or 2, characterized in that at least one critical program section and/or at least one non-critical program section is part of a program module which is processed by the data processing system (10).

4. Method according to claim 3, characterized in that after voltage recovery and with the presence of the first state identifier (ZK=1) the processes controlled by the program module are reset and/or the program module is processed anew.

5. Method according to claim 3, characterized in that after voltage recovery and with the presence of the second state identifier (ZK=2) the processing of the program module is continued.

6. Method according to one of claims 3 to 5, characterized in that with the processing of several program modules each program module is allocated a module identifier (MK) which is stored at least once in a non-volatile module memory (M) at the beginning of the processing of the program module, and in that with voltage recovery there is a branching to the program module with the module identifier (MK) stored last.

7. Method according to one of the preceding claims, characterized in that a non-volatile central memory (22) is used, the different memory areas of which, separated from each other, are used as first, second non-volatile memory (X,Y) and as state memory (Z).

8. Method according to claim 7, characterized in that a memory area (M) of the central memory (22) is used as module memory.

9. Method according to one of the preceding claims, characterized in that the first, the second and/or the third state identifier (ZK=1,2,0) and/or the module identifier (MK) is repeatedly stored in each case in n memory cells of the respective memory (Z or M), wherein n is a specified number, preferably 3.

10. Method according to claim 9, characterized in that with voltage recovery the n memory cells of the respective memories (Z or M) are read, and in that by means of a majority test and/or a plausibility test it is ascertained which state identifier (ZK) or module identifier (MK) is present.

11. Method according to one of the preceding claims, characterized in that it is used in a franking machine.

12. Method according to claim 11, characterized in that with the processing of the critical program section the postage calculation is carried out.

13. Method according to claim 11 or 12, characterized in that with the processing of the non-critical program section the printing procedure with the franking is carried out.

## Revendications

1. Procédé de fonctionnement d'une installation de traitement de données dans lequel l'installation de traitement de données, lors de l'exécution d'instructions de programme, exécute au moins une séquence de programme critique qui déclenche l'inscription d'informations dans une première mémoire non volatile et est quittée une fois l'exécution terminée, lors d'un rétablissement de la tension consécutif à une panne de tension, les informations qui étaient présentes dans la mémoire avant ladite panne de tension étant de nouveau disponibles,
dans lequel il est prévu en plus de la première mémoire (X), une deuxième mémoire (Y) non volatile pour le stockage des informations et une troisième mémoire non volatile servant de mémoire d'état (Z),
au début de l'inscription des informations dans la première mémoire (X) un indicateur d'état (ZK=1) est inscrit plusieurs fois dans différentes cellules de mémoire de la mémoire d'état (Z),
après l'inscription des informations, un deuxième indicateur d'état (ZK=2) différent du premier (ZK=1), est inscrit plusieurs fois dans la mémoire d'état (Z),
à la suite de quoi les mêmes informations sont inscrites dans la deuxième mémoire (Y) et la séquence de programme critique est quittée,
au rétablissement de la tension les codes d'état (ZK=1) qui ont été inscrits plusieurs fois en dernier dans la mémoire d'état (Z) avant la panne de tension sont lus et l'indicateur d'état (ZK) valide est déterminé par un contrôle comparatif,
s'il s'agit du premier indicateur d'état (ZK=1), celui-ci est inscrit plusieurs fois dans différentes cellules de mémoire de la mémoire d'état (Z),
puis les informations provenant de la deuxième mémoire (Y) sont transférées dans la première mémoire (X) et enfin la séquence de programme critique est quittée,
s'il s'agit du deuxième indicateur d'état (ZK=2), celui-ci est inscrit plusieurs fois dans différentes cellules de mémoire de la mémoire d'état (Z),
et dans lequel les informations sont ensuite inscrites de la première mémoire (X) dans la deuxième mémoire (Y), à la suite de quoi la séquence de programme critique est quittée et l'installation de traitement de données poursuit l'exécution des instructions de programme.

2. Procédé selon la revendication 1, caractérisé par le fait que l'installation de traitement de données (10) exécute en outre au moins une séquence de programme non critique qui n'entraîne pas d'inscription d'informations dans la première ou la deuxième mémoire non volatile (X), un troisième indicateur d'état (ZK=0) étant inscrit au moins une fois dans la mémoire d'état (Z) au début de l'exécution de cette séquence de programme non critique et par le fait qu'au rétablissement de la tension, si le troisième indicateur d'état (ZK=0) est présent, l'exécution de la séquence de programme non critique est poursuivie à partir du pas de programme interrompu.

3. Procédé selon la revendication 1 ou 2, caractérisé par le fait qu'au moins une séquence de programme critique et/ou au moins une séquence de programme non critique fait partie d'un module de programme qui est exécuté par l'installation de traitement de données (10).

4. Procédé selon la revendication 3, caractérisé par le fait qu'après le rétablissement de la tension et lorsque le premier indicateur d'état (ZK=1) est présent, les opérations commandées par le module de programme sont réinitialisées et/ou le module de programme est exécuté une nouvelle fois.

5. Procédé selon la revendication 3, caractérisé par le fait qu'après le rétablissement de la tension et lorsque le deuxième indicateur d'état (ZK=2) est présent l'exécution du module de programme est poursuivie.

6. Procédé selon une des revendications 3 à 5, caractérisé par le fait que dans le cas de l'exécution de plusieurs modules de programme un indicateur de module (MK) est associé à chaque module, lequel indicateur de module est mémorisé au moins une fois dans une mémoire de module (M) non volatile au début de l'exécution du module de programme et par le fait que lors du rétablissement de la tension on revient au module de programme dont l'indicateur de module (MK) a été mémorisé en dernier.

7. Procédé selon une des revendications précédentes, caractérisé par le fait que l'on utilise une mémoire centrale (22) non volatile dont les différentes zones de mémoire séparées les unes des autres sont utilisées en tant que première et deuxième mémoires (X, Y) non volatiles et en tant que mémoire d'état (Z).

8. Procédé selon la revendication 7, caractérisé par le fait que l'on utilise une zone de mémoire (M) de la mémoire centrale (22) comme module de de mémoire.

9. Procédé selon une des revendications précédentes, caractérisé par le fait que le premier, le deuxième et/ou le troisième indicateur d'état (ZK = 1, 2, 0) et/ou l'indicateur de module (MK) sont mémorisés chacun plusieurs fois dans n cellules de mémoire de la mémoire concernée (Z ou M), n étant un nombre préétabli, de préférence 3.

10. Procédé selon la revendication 9, caractérisé par le fait que lors du rétablissement de la tension on lit les n cellules de mémoire de la mémoire concernée (Z ou M) et par le fait que l'on détermine par un contrôle de majorité et/ou un contrôle de plausibilité quel indicateur d'état (ZK) ou indicateur de module (M) est présent.

11. Procédé selon une des revendications précédentes, caractérisé par le fait qu'il est appliqué dans une machine à affranchir.

12. Procédé selon la revendication 11, caractérisé par le fait que lors de l'exécution de la séquence de programme critique, on procède au calcul de l'affranchissement.

13. Procédé selon la revendication 11 ou 12, caractérisé par le fait que lors de l'exécution de la séquence de programme non critique, on procède à l'impression dans le processus d'affranchissement.
